# EUROPEAN PATENT SPECIFICATION

(11) **EP 3 711 145 B1**
(45) Date of publication and mention of the grant of the patent: **03.07.2024**
(21) Application number: 18879626.2
(22) Date of filing: 06.11.2018
(51) Int. Cl.: H02K 11/215, H02K 11/33, H02K 11/38, H02K 11/00, H02K 7/116, H02K 37/00

(54) **CONTROLLED ELECTRIC STEPPER MOTOR WITH GEAR STAGE**
GESTEUERTER ELEKTRISCHER SCHRITTMOTOR MIT GETRIEBESTUFE
MOTEUR PAS-À-PAS ÉLECTRIQUE COMMANDÉ À ÉTAGE D'ENGRENAGE

(30) Priority: 15.11.2017 SE 1751414
(43) Date of publication of application: 23.09.2020
(73) Proprietor: STEGIA AB, 723 48 Västerås (SE)
(72) Inventor: STJERNBERG, Johan, 722 18 Västerås (SE); BJÖRKMAN, Patrik, 725 92 Västerås (SE); LARSSON, David, 72210 Västerås (SE)
(74) Representative: Sandström, Staffan Sven
(86) International application number: PCT/SE2018/051132
(87) International publication number: WO 2019/098909

(56) References cited:
- EP-A1- 3 188 348
- EP-A2- 1 323 956
- EP-A2- 1 323 956
- EP-A2- 1 939 067
- EP-A2- 2 123 522
- US-A- 6 155 126
- US-A1- 2013 026 888
- US-A1- 2013 049 644

## Description

### TECHNICAL FIELD

The invention relates to an electric motor. In particular to an electric stepper motor with a gear stage, either rotational or linear.

### BACKGROUND

A gear stage can be used with an electric motor to increase the torque or convert the rotational movement to a linear motion. Normally, when adding a gear stage, the output shaft position cannot be known at startup without external sensors, even if the motor itself has a sensor. Another factor is that the sensor needs to last for a long time so it does not wear out.

Pre-existing motors are described in for example, US2013/049644, EP 1323956, EP3188348 and US6155126.

There is a constant desire to improve the operation of electric motors with gear stage and the control thereof. Hence there is a need for an improved electric motor.

### SUMMARY

It is an object of the present invention is to provide an improved motor assembly.

This object is obtained by a motor assembly as set out in the appended claims.

In accordance with the invention, a motor assembly is provided. The motor assembly comprising an electric stepper motor in connection with a mechanical gear unit having an output shaft. The motor assembly further comprises a controller, and a sensor for reading a magnetic signal. The sensor can in particular be a Hall-effect based sensor. The output shaft comprises a magnet, and the controller is configured to determine the position of the output shaft of the motor based on a reading of the magnetic signal from the sensor. Hereby, the controller can always determine the position of the output shaft. The control can then be improved because the positioning can be made very accurate. The sensor does not risk being worn out and is insensitive to dust. Further, the motor assembly provides for a locally controlled motor that can sustain a power loss without losing the position of the out-going shaft. The printed circuit board comprises the sensor for reading a magnetic signal. In particular, the printed circuit board can be located next to the output shaft of the motor assembly. Hereby a compact implementation of the controller circuitry used in the motor assembly can be provided. The printed circuit board forms a cover of a housing of the motor. Hereby the printed circuit board can be easily accessed. There is further no need for a separate lid or cover to the motor assembly. Also, visual indicators can be easily provided on the outside of the motor assembly since the visual indicators can be provided directly on the printed circuit board and be visible from the outside of the motor assembly. The sensor is located on the side of the printed circuit board facing the shaft. Hereby it is possible to position the sensor very close to the magnet. In particular, the sensor can be located less than 10mm, such as 1 - 2 mm, from the magnet.

The controller is in accordance with some embodiments be formed by a printed circuit board (PCB). Hereby an efficient implementation of a local controller can be obtained.

In accordance with one embodiment, the magnet is a diametrically magnetized magnet. Hereby an improved reading of the position can be obtained.

In accordance with one embodiment, the sensor is a Hall-effect based sensor. Hereby a sensor that is less sensitive for stray magnetic fields can be implemented and the reading can be improved.

In accordance with one embodiment, the printed circuit board is provided with visual indicators indicating the position of the output shaft. Hereby in easy to implement visual indicator of the position of the shaft can be obtained. The visual indicators can advantageously be formed by Light Emitting Diodes (LEDs).

In accordance with one embodiment, the electric stepper motor is arranged to drive a linearly moving output shaft. Hereby a linearly moving shaft of the motor assembly can be implemented.

In accordance with one embodiment, the electric stepper motor is arranged to drive a rotating output shaft. Hereby a rotating shaft of the motor assembly can be implemented. In particular the electric stepper motor can be configured to move the rotating shaft in a range that is less than one full revolution. Hereby it is possible to provide an absolute position of the shaft.

In accordance with one embodiment, the sensor is configured to provide an absolute position of the output shaft.

In accordance with one embodiment, a back-up energy unit is provided. Hereby the motor assembly can be driven electrically even in the case of power failure.

In accordance with one embodiment, the back-up energy unit is configured to output power when a power supply to motor assembly is turned off. Hereby, it is possible to continue driving the motor assembly even when there is a power failure.

The invention also relates to a damper arrangement for a ventilation system driven by the motor assembly as set out herein.

### BRIEF DESCRIPTION OF THE DRAWINGS

The invention will now be described in more detail, by way of example, and with reference to the accompanying drawings, in which:
Figure 1 shows an electric motor assembly in accordance with a first embodiment,
Figure 2 is a frontal view of the electric motor assembly according to the first embodiment,
Figure 3 is a cross-sectional view of the electric motor assembly according to the first embodiment,
Figure 4 is an exploded view of the electric motor assembly according to the first embodiment,
Figure 5 shows an electric motor assembly in accordance with a second embodiment,
Figure 6 is a side view of the electric motor assembly according to the second embodiment,
Figure 7 is a cross-sectional view of the electric motor assembly according to the second embodiment,
Figures 8a - 8c are views of the electric motor assembly according to the second embodiment, and
Figure 9 is a view of a motor assembly and energy back-up connected to a part of a ventilation system.

### DETAILED DESCRIPTION

The invention will now be described more fully hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

As has been realized, it would be good to provide an electric motor that could be controlled with high precision. Also, it would be beneficial if the motor could be resumed directly after power loss

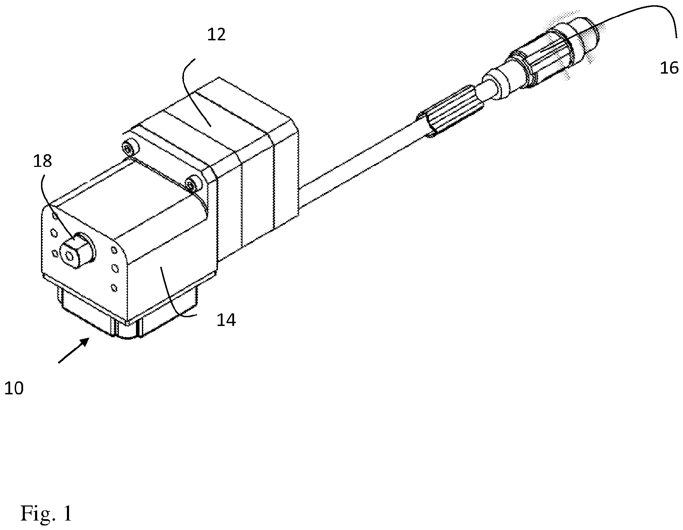

In Fig. 1, a first embodiment is shown. In Fig. 1, a linear motor assembly 10 that provides a linear motion of the output shaft is shown. The linear motor assembly 10 comprises a stepper motor 12 and a housing 14. The stepper motor 12 can be any type of stepper motor but is preferred to use a stepper motor that can be controlled in small steps. The housing 14 can comprise among other components a controller. The controller controls the drive of the linear motor assembly 10 as will be explained in more detail below. Also shown in Fig. 1 is a power cable 16. The power cable can also be designed to provide input/output signals to the linear motor assembly 10. The motor 12 has an output shaft formed by a linear rod 18 that can be moved in a linear trajectory by the stepper motor 12.

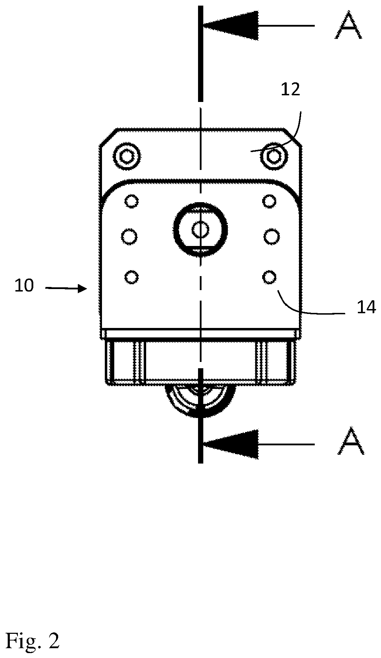

In Fig. 2, the linear motor assembly 10 of Fig. 1 is shown in a frontal view, and a section A-A is marked.

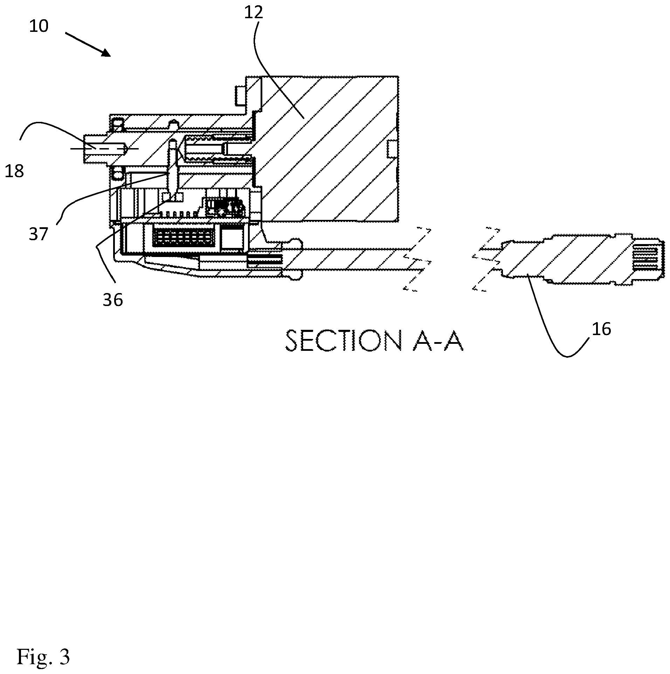

In Fig. 3 the linear motor assembly 10 is shown in a cross-sectional view along the section A-A in Fig 2. Fig. 3 shows a magnet 36 attached to an attachment pin 37.

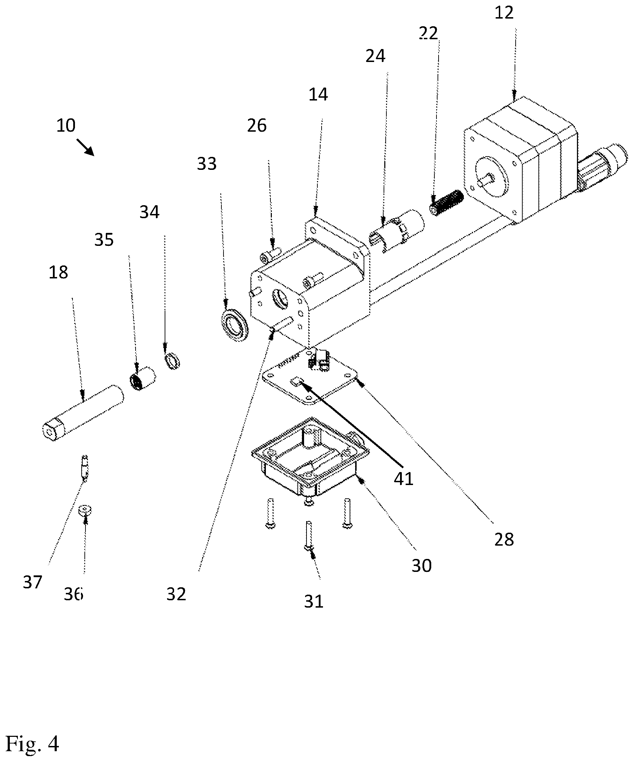

In Fig. 4, an exploded view of the linear motor assembly 10 is shown. In the exemplary embodiment of Fig. 4 the motor 12 is fitted with a lead screw 22. The corresponding lead screw nut 35 is pushed into the rod 18 and then locked using lock ring 34. However, a stepper motor directly providing a linear motion can also be used. In the housing 14 a linear bearing 24 is attached that the rod can slide in. A sealing 33 can further be provided to seal the shaft of the linear rod 18 as the linear rod moves back and forth driven by the stepper motor 12. Further, the housing 14 is attached to the stepper motor 12 using screws 26 or other similar fastening means. Inside the housing 14, a printed circuit board (PCB) 28 is located. The printed circuit board 28 can comprise a controller and driver to control the motion of the stepper motor 12. The PCB 28 also comprise a sensor 41, in particular a Hall-effect based sensor. Control of the motor assembly can be implemented by analog or digital signals, or digital bus communication. The PCB 28 can be accessed inside the housing 14 via a cover 30. The cover 30 can be attached to the housing 14 using some suitable means such as screws 31.

To enable a precise control and feedback of the position of the linear rod 18, an attachment pin 37 is screwed into the rod 18. The magnet 36 is then attached to the attachment pin 37. On the PCB 28 there is a sensor 41 reading the position of the magnet 36 and thus also the position of the rod 18. As can be seen in Fig. 4, the sensor 41 is located on the PCB on the side facing the magnet 36. Hereby the distance from the magnet 36 to the sensor 41 can be made small and in the order of mm. For example, the distance can be less than 10mm or in the range of 1- 2 mm. In accordance with some embodiments the sensor is a Hall effect sensor. This is advantageous because the Hall-effect sensor is less sensitive to magnetic stray fields. When located close to the magnet the sensor can read the signal from the magnet with high precision.

By providing the magnet 36 on the output shaft, here the linear rod 18, it is made possible to give an absolute position of the output shaft. The position cannot be lost, even if the shaft is moved by some other means than the motor or if the shaft is moved during power loss.

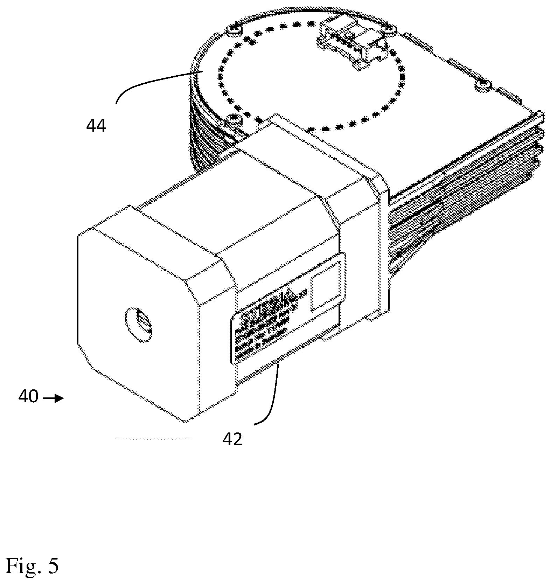

In Fig.5, a second embodiment of a motor assembly is shown. In Fig. 5, a geared motor assembly 40 is shown. The geared motor assembly 40 comprises a stepper motor 42. The geared motor assembly 40 comprises a housing 44. Inside the housing 44 various components can be located as will described hereinafter.

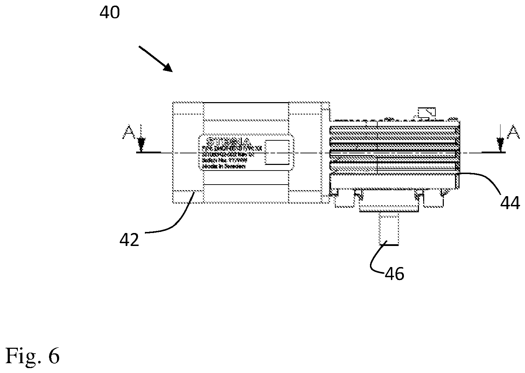

In Fig. 6, a view from the side of the geared motor assembly 40 is shown. In Fig. 6 the output shaft 46 from the geared motor assembly 40 is shown. Also, a section A-A is marked.

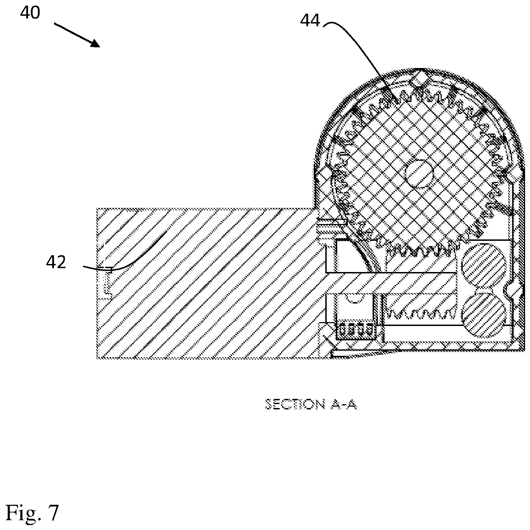

In Fig. 7 a cross-sectional view along the section A-A of Fig. 6 is shown. Here the worm gear can be seen.

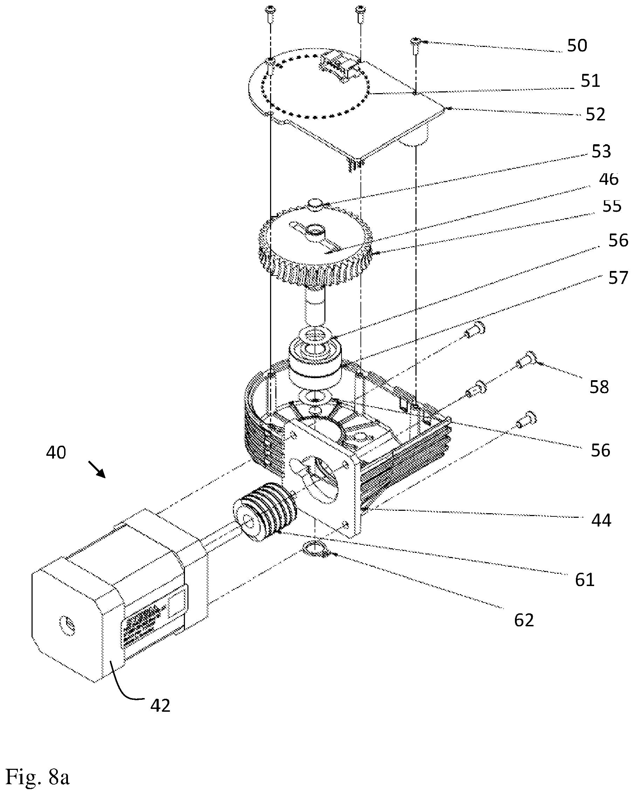

In Fig. 8a, an exploded view of the geared motor assembly 40 is shown. As is shown in Fig. 7 and Fig. 8a, the stepper motor 42 drives a screw 61, here a worm screw. The screw in turn drives a gear 55. The gear 55 is connected to the shaft 46 that can rotate when the stepper motor 42 is driven. Further, the housing 44 can be attached to the stepper motor 42 by some fastening means such as screws 58.

On the top side of output shaft 46, a magnet 53 is attached. The magnet can be a diametrically magnetized disc magnet 53. Half of the magnet 53 is north polarized and half of the magnet is south polarized, so a sensor can read the angle of the magnet. In other words, the magnet 53 is aligned with the magnetic field perpendicular to the sensor, so the sensor 41 can detect the angle of the magnet. The inside of the housing 44 can be accessed via a printed circuit board (PCB) 52. The PCB 52 can be attached to the housing via some fastening element such as screws 50. Because the PCB 52 is located just above the top of the shaft 46 where the magnet 53 is provided, a magnetic angle sensor placed on the PCB 52 can sense the angular position of the magnet and therefor also the angle of the output shaft. The rotating shaft 46 is supported in the housing 44 by bearings 57, such as ball bearings. Washers 56 are place on both sides of the ball bearings 57. Further, a clip 62 is used to lock the shaft into the desired position.

The provision of the magnet on the shaft enables an absolute positioning of the output shaft. Thus, the angular position of the output shaft can always be read. The position cannot be lost if the shaft is moved by some other means than the motor or if the shaft is moved during power loss, which would be the case for a relative type of sensor.

Further, because the PCB is located as a cover on the housing, it is possible to provide some type of visual indicator such as a number of LEDs 51 on the outside of the PCB to provide a visual indication of the current angular position of the rotating shaft. Further, because the PCB is used as a cover there is no need for a separate lid or similar to close the housing. A similar arrangement could be provided for a linearly moving output shaft.

The motor assemblies as described herein can further be provided with an energy back-up unit. The energy reserve could be used to continue the operation of the motor assembly when a loss of power occurs. The energy back-up could be provided by a large capacitor or a battery or some other component designed to store energy that can be used by the motor during a power loss. By having the energy back-up, the motor can be controlled to some pre-determined position during a power loss. For example, in case of a power loss it could be desired to close a ventilation system.

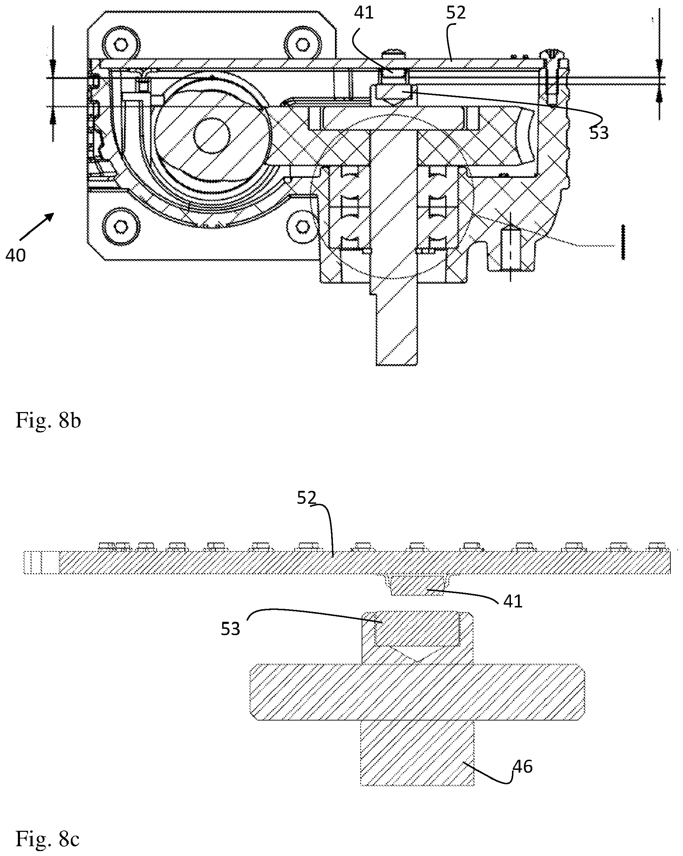

In Fig. 8b a cross sectional view of the motor assembly 40 is depicted. The sensor 41 is located on the PCB 52. The sensor 41 can be a Hall-effect based sensor. The Hall-effect based sensor can advantageously be located on the side of the PCB facing the shaft with the magnet, as to minimize the distance in between the sensor 41 and the magnet 53, and minimizing the influence of stray magnetic fields and magnetic bodies in the vicinity of the sensor 41. The PCB 52 also serves as a mechanical protection of the sensor from the outside.

In Fig. 8c, a detail of Fig. 8b is shown. Fig. 8c shows the PCB 52 having a sensor 41 mounted thereon. The sensor 41 is mounted on the inside of the PCB on the side of the PCB facing the shaft. The shaft has the magnet 53 provided thereon. Because the magnet 53 can be mounted on the end of the shaft 46, and the sensor 41 can be mounted on the inside of the PCB 52, it is possible to separate the sensor 53 and the magnet 36 by a very small distance. In accordance with some embodiments the distance is less than 10 mm and in particular 1 - 2 mm. There has to be some distance to ensure that the sensor is not in direct contact with the magnet or the shaft.

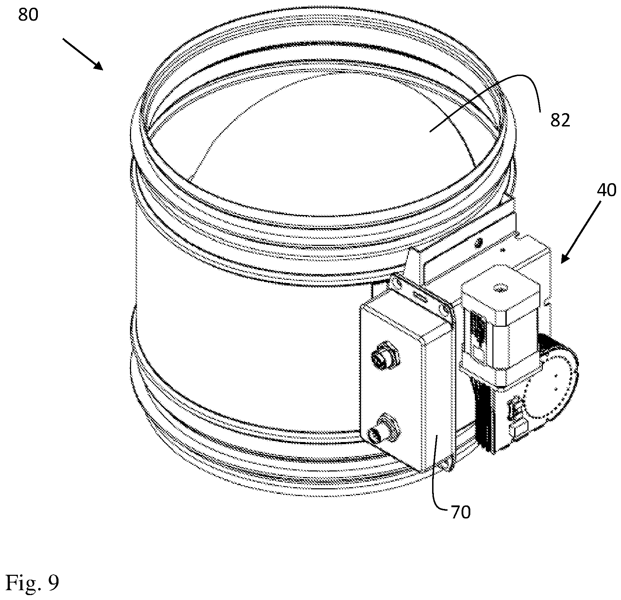

In Fig. 9 an arrangement 80 that can be used in a ventilation system is shown. The arrangement of Fig. 9 shows a part of a ventilation system comprising an air-flow damper 82. The air-flow damper 82 can be controlled by the motor assembly 40 as described herein. If a fire breaks out and power is lost, the ventilation should be closed fast to not feed oxygen to the fire. By providing an energy back-up unit 70, the ventilation, in particular an air-flow damper, can be closed fast in such a scenario. In particular, the closing could be made much faster than if a mechanic arrangement using a spring or similar was used.

The motor assemblies as described herein provide for a contactless sensor arrangement whereby the position of the output shaft of the unit can be read. Mechanically this type of sensor is not worn out, as potentiometer sensor solutions, or sensitive to dust, as optical sensor solutions. Moreover, if a Hall-effect based sensor is used, the sensor can be more temperature stable and less sensitive to magnetic stray fields than other types of magnetic sensors such as Magneto Resistance sensors. To have the sensor inside the unit is also beneficial since no external sensors need to be installed along with the unit. Also, the sensor can then be protected from external mechanical impacts by being located inside the housing.

The motor assemblies further enable locally controlled motors that can sustain a power loss without losing the position of the out-going shaft.

The positioning can be made very accurate due to the precise reading enabled by the sensor reading a magnetic signal in combination with the magnet on the out-going shaft of the motor assembly.

The invention has been described above with reference to a few embodiments. However, as is readily appreciated by a person skilled in the art, other embodiments than the ones disclosed above are equally possible within the scope of the invention, as defined by the appended claims.

## Claims

1. A geared motor assembly (10, 40) comprising:
- an electric stepper motor (12, 42), connected to a mechanical gear unit comprising a gear element (61, 22, 24) driven by the motor (12, 42), which in turn drives another gear element (35, 55) which is connected to an output shaft (18, 46), said shaft actuated when the stepper motor (12, 42) is driven
- a mechanical gear unit housing (14, 44) attached to the electric stepper motor (12, 42),
- a controller,
- a sensor (41) for reading a magnetic signal, and
- a printed circuit board (28, 52) with said sensor (41) mounted thereon
wherein the output shaft (18, 46) comprises an attached magnet (36, 53),
wherein the controller is configured to determine the position of the output shaft (18, 46) based on a reading of the magnetic signal from magnet (36, 53) by the sensor (41),
wherein the sensor (41) in the printed circuit board (28, 52) is located next to the magnet (36, 53) attached to the output shaft (18, 46) of the motor assembly (10, 40), **characterized in that** the sensor (41) is located on the side of the printed circuit board (28, 52) facing the output shaft (46) and where the printed circuit board (28, 52) forms the cover of the mechanical gear unit housing (44) of the motor assembly (10, 40).

2. The motor assembly (10, 40) according to claim 1, wherein a controller is formed on the printed circuit board (52).

3. The motor assembly (10, 40) according to claim 1 or 2, wherein the magnet (53) is a diametrically magnetized magnet.

4. The motor assembly (10, 40) according to any one of claims 1 - 3, wherein the sensor (41) is a Hall-effect based sensor.

5. The motor assembly (10, 40) according to any one of claims 1 - 4, wherein the sensor (41) is located less than 10mm, in particular 1 - 2 mm from the magnet (36, 53).

6. The motor assembly (10, 40) according to any one of claims 1 - 5, wherein the printed circuit board (28, 52) is provided with visual indicators (51) indicating the position of the output shaft (46).

7. The motor assembly (10, 40) according to claim 6, wherein the visual indicators are formed by LEDs (51).

8. The motor assembly (10) according to any one of claims 1 - 7, wherein the electric stepper motor (12, 42) is arranged to drive a linearly moving output shaft (18).

9. The motor assembly (40) according to any one of claims 1 - 7, wherein the electric stepper motor (42) is arranged to drive a rotating output shaft (46).

10. The motor assembly (40) according to claim 9, wherein the electric stepper motor (42) is configured to move the rotating output shaft (46) in a range that is less than one full revolution of the rotating output shaft (46).

11. The motor assembly (10, 40) according to any one of claims 1 - 10, wherein sensor (41) is configured to provide an absolute position of the output shaft (18, 46).

12. The motor assembly (10, 40) according to any one of claims 1 - 11, wherein a back-up energy unit (70) is provided.

13. The motor assembly (10, 40) according to claim 12, wherein the back-up energy unit (70) is configured to output power when a power supply to motor assembly is turned off.

## Patentansprüche

1. Getriebemotoranordnung (10, 40), umfassend:
- einen elektrischen Schrittmotor (12, 42), der mit einer mechanischen Getriebeeinheit verbunden ist, die ein vom Motor (12, 42) angetriebenes Getriebeelement (61, 22, 24) umfasst, das wiederum ein weiteres Getriebeelement (35, 55), das mit einer Abtriebswelle (18, 46) verbunden ist, antreibt, wobei die Welle betätigt wird, wenn der Schrittmotor (12, 42) angetrieben wird,
- ein am elektrischen Schrittmotor (12, 42) befestigtes mechanisches Getriebeeinheitsgehäuse (14, 44),
- eine Steuereinheit,
- einen Sensor (41) zum Lesen eines magnetischen Signals, und
- eine Leiterplatte (28, 52) mit dem darauf montierten Sensor (41), wobei die Abtriebswelle (18, 46) einen befestigten Magneten (36, 53) umfasst,
wobei die Steuereinheit so konfiguriert ist, dass sie die Position der Abtriebswelle (18, 46) basierend auf einem Lesen des magnetischen Signals vom Magneten (36, 53) durch den Sensor (41) bestimmt,
wobei sich der Sensor (41) in der Leiterplatte (28, 52) neben dem Magneten (36, 53) befindet, der an der Abtriebswelle (18, 46) der Motoranordnung (10, 40) befestigt ist, **dadurch gekennzeichnet,**
**dass** sich der Sensor (41) auf der Seite der Leiterplatte (28, 52) befindet, die der Abtriebswelle (46) zugewandt ist, und wobei die Leiterplatte (28, 52)
den Deckel des mechanischen Getriebeeinheitsgehäuses (44) der Motoranordnung (10, 40) bildet.

2. Motoranordnung (10, 40) nach Anspruch 1, wobei eine Steuereinheit auf der Leiterplatte (52) gebildet ist.

3. Motoranordnung (10, 40) nach Anspruch 1 oder 2, wobei der Magnet (53) ein diametral magnetisierter Magnet ist.

4. Motoranordnung (10, 40) nach einem der Ansprüche 1-3, wobei der Sensor (41) ein auf Hall-Effekt basierender Sensor ist.

5. Motoranordnung (10, 40) nach einem der Ansprüche 1-4, wobei sich der Sensor (41) weniger als 10 mm, insbesondere 1-2 mm, vom Magneten (36, 53) befindet.

6. Motoranordnung (10, 40) nach einem der Ansprüche 1-5, wobei die Leiterplatte (28, 52) mit optischen Indikatoren (51) versehen ist, die die Position der Abtriebswelle (46) angeben.

7. Motoranordnung (10, 40) nach Anspruch 6, wobei die optischen Indikatoren von LEDs (51) gebildet werden.

8. Motoranordnung (10) nach einem der Ansprüche 1-7, wobei der elektrische Schrittmotor (12, 42) so angeordnet ist, dass er eine sich linear bewegende Abtriebswelle (18) antreibt.

9. Motoranordnung (40) nach einem der Ansprüche 1-7, wobei der elektrische Schrittmotor (42) so angeordnet ist, dass er eine sich drehende Abtriebswelle (46) antreibt.

10. Motoranordnung (40) nach Anspruch 9, wobei der elektrische Schrittmotor (42) so konfiguriert ist, dass er die sich drehende Abtriebswelle (46) in einem Bereich bewegt, der weniger als eine volle Umdrehung der sich drehenden Abtriebswelle (46) beträgt.

11. Motoranordnung (10, 40) nach einem der Ansprüche 1 -10, wobei der Sensor (41) so konfiguriert ist, dass er eine absolute Position der Abtriebswelle (18, 46) bereitstellt.

12. Motoranordnung (10, 40) nach einem der Ansprüche 1 -11, wobei eine Reserveenergieeinheit (70) bereitgestellt ist.

13. Motoranordnung (10, 40) nach Anspruch 12, wobei die Reserveenergieeinheit (70) so konfiguriert ist, dass sie Leistung abgibt, wenn eine Leistungsversorgung zur Motoranordnung abgeschaltet ist.

## Revendications

1. Ensemble moteur à engrenages (10, 40) comprenant :
- un moteur pas à pas électrique (12, 42), relié à une unité d'engrenage mécanique comprenant un élément d'engrenage (61, 22, 24) entraîné par le moteur (12, 42), qui entraîne à son tour un autre élément d'engrenage (35, 55) qui est relié à un arbre de sortie (18, 46), ledit arbre étant actionné lorsque le moteur pas à pas (12, 42) est entraîné
- un boîtier d'unité d'engrenage mécanique (14, 44) fixé au moteur pas à pas électrique (12, 42),
- un dispositif de commande,
- un capteur (41) pour lire un signal magnétique, et
- une carte de circuit imprimé (28, 52) sur laquelle est monté ledit capteur (41), dans lequel l'arbre de sortie (18, 46) comprend un aimant fixé (36, 53),
dans lequel le dispositif de commande est configuré pour déterminer la position de l'arbre de sortie (18, 46) sur la base d'une lecture du signal magnétique provenant de l'aimant (36, 53) par le capteur (41),
dans lequel le capteur (41) dans la carte de circuit imprimé (28, 52) est situé à côté de l'aimant (36, 53) fixé à l'arbre de sortie (18, 46) de l'ensemble moteur (10, 40), **caractérisé en ce que**
le capteur (41) est situé côté carte de circuit imprimé (28, 52) orienté vers l'arbre de sortie (46) et où la carte de circuit imprimé (28, 52)
forme le couvercle du boîtier d'unité d'engrenage mécanique (44) de l'ensemble moteur (10, 40).

2. Ensemble moteur (10, 40) selon la revendication 1, dans lequel un dispositif de commande est formé sur la carte de circuit imprimé (52).

3. Ensemble moteur (10, 40) selon la revendication 1 ou 2, dans lequel l'aimant (53) est un aimant diamétralement magnétisé.

4. Ensemble moteur (10, 40) selon l'une quelconque des revendications 1-3, dans lequel le capteur (41) est un capteur à effet Hall.

5. Ensemble moteur (10, 40) selon l'une quelconque des revendications 1-4, dans lequel le capteur (41) est situé à moins de 10 mm, en particulier à 1-2 mm de l'aimant (36, 53).

6. Ensemble moteur (10, 40) selon l'une quelconque des revendications 1-5, dans lequel la carte de circuit imprimé (28, 52) est dotée d'indicateurs visuels (51) indiquant la position de l'arbre de sortie (46).

7. Ensemble moteur (10, 40) selon la revendication 6, dans lequel les indicateurs visuels sont formés par des DEL (51).

8. Ensemble moteur (10) selon l'une quelconque des revendications 1-7, dans lequel le moteur pas à pas électrique (12, 42) est agencé pour entraîner un arbre de sortie à déplacement linéaire (18).

9. Ensemble moteur (40) selon l'une quelconque des revendications 1-7, dans lequel le moteur pas à pas électrique (42) est agencé pour entraîner un arbre de sortie rotatif (46).

10. Ensemble moteur (40) selon la revendication 9, dans lequel le moteur pas à pas électrique (42) est configuré pour déplacer l'arbre de sortie rotatif (46) dans une plage qui est inférieure à un tour complet de l'arbre de sortie rotatif (46).

11. Ensemble moteur (10, 40) selon l'une quelconque des revendications 1-10, dans lequel le capteur (41) est configuré pour fournir une position absolue de l'arbre de sortie (18, 46).

12. Ensemble moteur (10, 40) selon l'une quelconque des revendications 1-11, dans lequel une unité d'énergie de secours (70) est prévue.

13. Ensemble moteur (10, 40) selon la revendication 12, dans lequel l'unité d'énergie de secours (70) est configurée pour produire de l'énergie lorsqu'une alimentation électrique de l'ensemble moteur est coupée.
